# EUROPÄISCHE PATENTANMELDUNG

(11) **EP 0 681 131 A1**
(43) Veröffentlichungstag der Anmeldung: **08.11.1995**
(21) Anmeldenummer: 95106605.9
(22) Anmeldetag: 03.05.1995
(51) Int. Cl.: F16L 3/00

(54) **Gekrümmter Schlauchabschnitt**

(30) Priorität: 04.05.1994 DE 4415730; 22.10.1994 DE 4437918
(71) Anmelder: Continental Aktiengesellschaft, D-30165 Hannover (DE)
(72) Erfinder: Keuper, Dieter, Dr., D-37589 Kalefeld (DE); Reuter, Wilfried, D-34497 Korbach (DE); Füllgrabe, Manfred, D-34497 Korbach (DE); Österling, Jost, D-34513 Waldeck (DE)

(57) **Zusammenfassung**

Zur Erzeugung eines ein- oder mehrfach gekrümmten Schlauchabschnittes (1) wird erfindungsgemäß von einem in üblicher Weise in gerader Form fertiggestellten Schlauch ausgegangen, der seine Krümmung(en) dadurch erhält, daß er in den betreffenden Bereichen (I, II, III) mit entsprechend gekrümmten formsteifen Formgebungselementen (2) versehen wird.

## Beschreibung

Die Erfindung betrifft einen ein- oder mehrfach gekrümmten Schlauchabschnitt gemäß dem Oberbegriff des Patentanspruchs 1.

Derartige gekrümmte Schlauchabschnitte - sogenannte Schlauchkrümmer - werden in verschiedenen Ausführungsformen, beispielsweise als Kraftstoff- oder Kühlwasserleitungen - insbesondere im Motorraum von Kraftfahrzeugen - eingesetzt, wo die engen Platzverhältnisse sowie die Ausrichtung der zugehörigen Anschlußstutzen eine ein- oder mehrfach abgewinkelte Anordnung der Schläuche erforderlich machen.

Bisher wurden solche gekrümmten Schlauchabschnitte hergestellt, indem man Schlauch-Rohlinge ablängte, sie im plastisch verformbaren Zustand auf entsprechend gekrümmte Form-Dorne aufzog und sie auf diesen dem endgültigen Formungsprozeß unterwarf, durch den die Schlauchwandung ihre bleibende Krümmung erhielt. Beispiele dieser Hersteliungsweise sind den deutschen Offenlegungsschriften 21 40 956, 24 22 557 und 27 37 278 zu entnehmen.

Der vorliegenden Erfindung liegt die Aufgabe zugrunde, Schlauchabschnitte mit ein- oder mehrfacher Krümmung aufzuzeigen, die sich durch eine besonders unkomplizierte und kostengünstige Herstellung sowie einfache Möglichkeiten der Umstellung auf geänderte Krümmungsradien sowie Anordnung der Krümmungen zueinander auszeichnen.

Diese Aufgabe wird erfindungsgemäß durch einen Schlauchabschnitt der eingangs genannten Gattung gelöst, der die im kennzeichnenden Teil des Patentanspruchs 1 genannten Merkmale aufweist. Vorteilhafte Ausführungsformen des erfindungsgemäßen Schlauchabschnittes sind in den Patentansprüchen 2 und 3 gekennzeichnet, bevorzugte Herstellungsverfahren in den Patentansprüchen 4 bis 10.

Erfindungsgemäße Schlauchkrümmer sind also aus kostengünstig fortlaufend in großen Längen oder quasi endlos extrudierten und gegebenenfalls mit Verstärkungseinlagen versehenen, in durchgehend gerader Form fertiggestellten Schläuchen gebildet, indem Abschnitte solcher fertiger Schläuche in denjenigen Bereichen, in denen eine Krümmung gefordert ist, jeweils mit entsprechend gekrümmten formsteifen Formgebungselementen versehen sind, die dem Schlauchabschnitt seine vorgesehene gekrümmte Form geben und ihn in dieser Form halten. Damit wird die individuelle typgemäße Krümmungsformgebung an das äußerste Ende des Herstellungsprozesses verlegt, so daß aus ein und demselben kostengünstig kontinuierlich hergestellten und in großen Mengen auf Abruf bevorratbaren Schlauch ganz unterschiedliche Schlauchkrümmer eines bestimmten Durchmessers angefertigt werden können, indem geeignete gekrümmte Ummantelungen oder Einsätze nachträglich an bestimmten Stellen auf abgelängte gerade Schlauchabschnitte aufgebracht bzw. eingesetzt werden.

Vorzugsweise wird bei der Herstellung der erfindungsgemäßen Schlauchkrümmer so verfahren, daß man jeweils auf einen Abschnitt eines in üblicher Weise fertiggestellten geraden Schlauches als Formgebungselemente formsteife, die vorgesehene(n) Schlauchkrümmung(en) aufweisende Rohrabschnitte aufschiebt, deren Innenweite (etwa) dem Außendurchmesser des Schlauchabschnittes entspricht. Die Krümmungsradien der dabei verwendeten Rohrabschnitte entsprechen den jeweils vorgesehenen Schlauchkrümmungen.

In einer anderen vorteilhaften Ausführungsform der Erfindung geht man ebenfalls von einem Abschnitt eines in üblicher Weise fertiggestellten Schlauches aus, verwendet jedoch als Formgebungselemente formsteife Einsätze, deren Außendurchmesser der Innenweite des Schlauchabschnittes entspricht und die in das Schlauchinnere eingeschoben und dort fixiert werden.

Zur Erleichterung des Auf- bzw- Einschiebens kann es zweckmäßig sein, ein Gleitmittel zu verwenden. Hierfür kommt Wasser in Betracht; besonders vorteilhaft ist jedoch die Verwendung einer lösungsmittelhaltigen oder vernetzenden viskosen Substanz, die nach dem Auf- bzw. Einschieben der Formgebungselemente aushärtet, wodurch diese stoff- und/oder formschlüssig auf bzw. in dem Schlauchabschnitt fixiert werden. Zur verschiebe- und drehfesten Fixierung der Formgebungselemente kommt auch eine mechanische Verrastung in Betracht.

Eine andere vorteilhafte Möglichkeit zur Herstellung der erfindungsgemäßen Schlauchkrümmer besteht darin, biegbare Formgebungungselemente in gerader Form auf bzw. in die geraden Schlauchabschnitte zu schieben, sie an den vorgesehenen Krümmungsstellen zu positionieren und sie dann zusammen mit den Schlauchabschnitten so zu biegen, daß sie - und damit auch die Schlauchabschnitte - jeweils die erforderliche bleibende Krümmung aufweisen.

Nach einem weiteren vorteilhaften Verfahren werden erfindungsgemäße Schlauchkrümmer hergestellt, indem man die in üblicher Weise fertiggestellten geraden Schlauchabschnitte an den vorgesehenen Krümmungsbereichen krümmt und in einer entsprechend gekrümmt ausgebildeten Spritzform mit einer Ummantelung aus einem spritzfähigen erstarrenden bzw. aushärtenden Werkstoff umspritzt.

Die formsteifen gekrümmten Ummantelungen, die die ursprünglich geraden Schlauchabschnitte erfindungsgemäß in exakt vorbestimmter Weise krümmen und gekrümmt halten, brauchen keine vollflächig geschlossene Wandung aufzuweisen, sondern können mit - z.B. fensterartigen - Durchbrüchen versehen oder aus in geeigneter Weise - insbesondere gitter- oder netzartig - angeordneten, eine formsteife Struktur bildenden Stegen erzeugt sein. Derartige Ausführungsformen der vorliegenden Erfindung zeichnen sich insbesondere durch Material- und Gewichtseinsparungen aus.

Als formgebende formsteife Einsätze, die im Schlauchinnern positioniert werden und von dort aus den Schlauchabschnitt nach Maßgabe ihrer eigenen Krümmung krümmen und gekrümmt halten, kommen ebenfalls in erster Linie gekrümmte Rohrabschnitte - insbesondere mit durchbrochener Wandung - in Betracht. Alternativ können diese Einsätze einen von der Kreisform abweichenden Querschnitt aufweisen und beispielsweise als gekrümmte Profilabschnitte mit kreuzförmigem Querschnitt so ausgebildet sein, daß sie den freien Querschnitt des Schlauchabschnittes nur unwesentlich verengen.

Die beigefügte Zeichnung veranschaulicht die vorliegende Erfindung anhand schematisch dargestellter Ausführungsbeispiele.

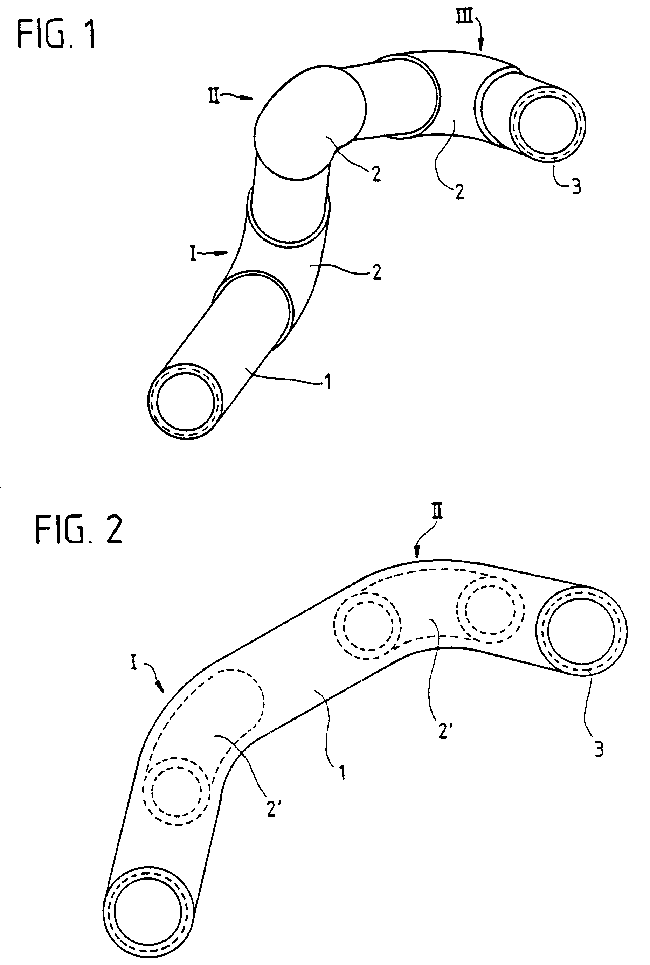

Fig. 1 zeigt einen vorzugsweise aus Gummi oder gummiähnlichen Kunststoffen gebildeten erfindungsgemäßen Schlauchabschnitt 1, dessen Wandung eine Verstärkungseinlage 3 enthält. Der ursprünglich insgesamt in gerader Form fertiggestellte Schlauchabschnitt ist in den Bereichen I, II und III durch gekrümmte formsteife Rohrabschnitte 2 formschlüssig umfaßt, so daß er - entsprechend der Positionierung und Krümmung der Rohrabschnitte 2 - dreifach gekümmt ist.

Bei der in Fig. 2 wiedergegebenen Ausführungsform ist der ursprünglich insgesamt in gerader Form fertiggestellte Schlauchabschnitt 1 von innen her durch in ihn eingeschobene gekrümmte, formsteife Rohrabschnitte 2' in den Bereichen I und II in eine zweifach abgewinkelte Form gebracht worden.

## Patentansprüche

1. Ein- oder mehrfach gekrümmter Schlauchabschnitt, dessen Wandung aus polymeren Werkstoffen mit oder ohne textilen Verstärkungslagen gebildet ist,
**dadurch gekennzeichnet,**
daß er aus einem in üblicher Weise in gerader Form fertiggestellten Schlauch (1) gebildet ist, der in den gekrümmten Bereichen (I, II, III) durch formsteife gekrümmte Formgebungselemente (2, 2') in die jeweilige gekrümmte Form gebogen und in dieser Form gehalten ist.

2. Schlauchabschnitt nach Anspruch 1, dadurch gekennzeichnet, daß er in den gekrümmten Bereichen als Formgebungselement jeweils eine Ummantelung in Form eines entsprechend gekrümmten formsteifen Rohrabschnittes (2) aufweist, dessen Innenweite dem Außendurchmesser des Schlauches (1) entspricht.

3. Schlauchabschnitt nach Anspruch 1, dadurch gekennzeichnet, daß er in den gekrümmten Bereichen (I, II, III) als Formgebungselement jeweils einen im Schlauchinnern angeordneten entsprechend gekrümmten formsteifen, insbesondere rohrförmigen Einsatz (2') aufweist, dessen Außendurchmesser der Innenweite des Schlauches (1) entspricht.

4. Verfahren zum Herstellen eines ein- oder mehrfach gekrümmten Schlauchabschnittes nach einem der Ansprüche 1 bis 3, dadurch gekennzeichnet, daß ein Abschnitt eines in üblicher Weise fertiggestellten geraden Schlauches in einem oder mehreren vorbestimmten Längsbereich(en) jeweils mit einem vorgefertigten, entsprechend der vorgesehenen Schlauchkrümmung gekrümmten formsteifen Formgebungselement versehen wird.

5. Verfahren zum Herstellen eines ein- oder mehrfach gekrümmten Schlauchabschnittes nach einem der Ansprüche 1 bis 3, dadurch gekennzeichnet, daß ein Abschnitt eines in üblicher Weise fertiggestellten geraden Schlauches in einem oder mehreren vorbestimmten Längsbereich(en) jeweils mit einer Ummantelung bzw. einem Einsatz in Form eines geraden, verformbaren Formgebungselementes versehen wird, und daß das Formgebungselement dann in eine der vorgesehenen Schlauchkrümmung entsprechende, formsteife bleibende Form gebogen wird.

6. Verfahren nach Anspruch 4 oder 5, dadurch gekennzeichnet, daß auf die Formgebungselemente und/oder die ihnen zugewandte Schlauchwandungsfläche vor dem Auf- bzw. Einsetzen der Formgebungelemente ein Gleitmittel aufgebracht wird.

7. Verfahren nach einem der Ansprüche 4 bis 6, dadurch gekennzeichnet, daß die Formgebungselemente, nachdem sie in ihre die vorgesehene Schlauchkrümmung bewirkende Position gebracht sind, verschiebe- und drehfest stoff- und/oder formschlüssig am bzw. im Schlauch fixiert werden.

8. Verfahren nach Anspruch 6 oder 7, dadurch gekennzeichnet, daß als Gleitmittel zum Auf- bzw. Einschieben der gekrümmten Formgebungselemente eine lösungsmittelhaltige oder vernetzende viskose Substanz verwendet wird, die nach dem Auf- bzw. Einschieben der Formgebungselemente aushärtet und dabei deren stoff- und/oder formschlüssige Fixierung bewirkt.

9. Verfahren nach Anspruch 6, dadurch gekennzeichnet, daß als Gleitmittel Wasser verwendet wird.

10. Verfahren zum Herstellen eines ein- oder mehrfach gekrümmten Schlauchabschnittes nach Anspruch 2, dadurch gekennzeichnet, daß ein Abschnitt eines in üblicher Weise fertiggestellten geraden Schlauches an den vorgesehenen Krümmungsbereichen gekrümmt und in einer entsprechend gekrümmt ausgebildeten Spritzform mit einer Ummantelung aus einem spritzfähigen erstarrenden bzw. aushärtenden Werkstoff umspritzt wird.
